# EUROPEAN PATENT APPLICATION

(11) **EP 4 666 845 A1**
(43) Date of publication of application: **24.12.2025**
(21) Application number: 25182420.7
(22) Date of filing: 12.06.2025
(51) Int. Cl.: A01J 25/16, B25J 15/02

(54) **VEHICLE FOR USE IN A DAIRY-PRODUCTION PROCESS, AND COMBINATION OF A VEHICLE FOR USE IN A DAIRY-PRODUCTION PROCESS AND A FACILITY FOR PRODUCING A DAIRY PRODUCT**

(30) Priority: 17.06.2024 NL 2037961
(71) Applicant: Lely Patent N.V., 3147 PB Maassluis (NL)
(72) Inventor: VAN DEN BERG, Karel, 3147 PB Maassluis (NL); VAN LEEUWEN, Stefan, 3147 PB Maassluis (NL); SIE, Howard, 3147 PB Maassluis (NL); BOSMA, Stijn, 3147 PB Maassluis (NL)
(74) Representative: Octrooibureau Van der Lely N.V.

(57) **Abstract**

A vehicle (1) for use in a dairy-production process comprises an object-handling mechanism (5) which is configured to pick up and hold an object (6) and to release said object again, and a holder (8) on which the object-handling mechanism is mounted. The object-handling mechanism comprises two main clamping arms (9) which extend next to one another with a gap, an actuator device which is configured to cause the main clamping arms to move towards one another or away from one another, and two auxiliary clamping systems (13) with an auxiliary clamping arm (14), which extends at least partially in the gap between the main clamping arms (9) and a connecting arm (15). On account of the connecting arm, during a movement of the main clamping arms in relation to one another, a change in the position of the auxiliary clamping arms in relation to the main clamping arms is realized automatically at the same time. Consequently, the object-handling mechanism is ideal for reliably picking up and firmly clamping objects of different sizes, such as vessels with different diameters.

## Description

The invention relates to a vehicle for use in a dairy-production process, comprising an object-handling mechanism which is configured to pick up and hold an object and to release said object again, and a holder on which the object-handling mechanism is mounted, wherein the holder is situated on a frame of the vehicle.

The invention also relates to a combination of such a vehicle, a facility for producing a dairy product, which comprises at least one process location configured for carrying out of an action on the dairy product, an intermediate form of the dairy product or one or more raw materials of the dairy product, and at least one vessel for holding therein the dairy product, an intermediate form of the dairy product or one or more raw materials of the dairy product.

A vehicle for use in a dairy-production process is known per se. The aforementioned combination is also known per se. WO-2020/197392-A1 discloses a milking machine for milking dairy animals with a production line for producing cheese coupled thereto. The milking machine may be a fully automatic milking machine (milking robot). The production line comprises a number of separate process locations where intermediate products are generated and/or treated, wherein the transport between the process locations and the mechanical handling of the base milk obtained in the milking machine, the intermediate products and the cheese in the process locations takes place with the aid of a fully automatic robot vehicle provided for this purpose.

At a selection location of the production line, the milked milk is distributed between a number of transport vessels for the base milk and a separation vessel for separating off any unsuitable milk that does not meet applicable quality standards. In this way, well-defined quantities of base milk serving as a basis for the cheese production are generated, whereby effective traceability of the end product is realized. The robot vehicle is used for various tasks, such as:
- transporting the transport vessels containing the base milk to a mixing location of the production line, where a lactic starter and/or calcium chloride and/or rennet are/is added to the base milk, wherein this is stirred and is converted into curd with whey,
- transporting the transport vessels containing the base milk converted into curd with whey to a cutting location of the production line, where the curd with whey is cut into cubes, after which the whey is pumped away,
- transferring the entire contents of each transport vessel to a filtration tray at a filtration location for further draining of whey from the curd,

- transferring the entire contents of each filtration tray to an individual brine tray at a brining location for brining the curd in brine, so that it is converted into cheese,
- possibly beforehand transferring the entire contents of each filtration tray to a resting tray at a resting location,
- transferring the entire contents of each brine tray to a storage location for further maturing of the cheese,
- regularly turning over the cheeses at the storage location,
- putting a label on the cheeses at the storage location, said label containing information about the composition of the cheese and/or about the dairy animal or the dairy animals from which the base milk was milked, and
- cleaning transport vessels and/or filtration trays and/or brine trays at a cleaning location.

In order for the various actions for which the robot vehicle is used to proceed effectively, it is important that the robot vehicle is able to pick up and hold each of the objects involved in the actions and to release said objects again. In view thereof, it is an object of the invention to provide a vehicle which is configured to handle objects of different sizes without, for this purpose, a complex construction being necessary or auxiliary aids having to be used.

The invention provides a vehicle for use in a dairy-production process, such as a cheese-production process, comprising an object-handling mechanism which is configured to pick up and hold an object and to release said object again, and a holder on which the object-handling mechanism is mounted, wherein the holder is situated on a frame of the vehicle and the object-handling mechanism comprises the following components:
- two main clamping arms which extend next to one another with a gap, each have a connecting region and an object-contact region situated at a distance from the connecting region, are pivotably connected to the holder at the connecting region, and are configured to come into contact with an object at the object-contact region,
- an actuator device which is configured to act on the main clamping arms so as to bring about a pivoting movement of the main clamping arms in relation to the holder that is a movement of the main clamping arms towards one another or away from one another, and
- two auxiliary clamping systems with an auxiliary clamping arm, which extends at least partially in the gap between the main clamping arms, and a connecting arm, wherein the auxiliary clamping arm is pivotably connected to one of the main clamping arms at a position between the connecting region and the object-contact region of the main clamping arm, is also connected to the holder by means of the connecting arm, one side of which is pivotably connected to the auxiliary clamping arm and the other side of which is pivotably connected to the holder, and has an object-contact region at the place where the auxiliary clamping arm is configured to come into contact with an object.

On the basis of the use of the auxiliary clamping systems in the object-handling mechanism of the vehicle according to the invention, it is possible for the vehicle to be able to reliably pick up and hold objects of different sizes and release said objects again, wherein contact with an object is realized at at least four places, specifically by means of the object-contact regions of the main clamping arms and the object-contact regions of the auxiliary clamping arms. If the two main clamping arms alone were present in the object-handling mechanism, then contact with an object would be possible only at two oppositely situated places and the object would be handlable in a significantly less reliable manner and/or have to be subjected to very high forces locally. The construction with the auxiliary clamping systems is relatively simple, wherein the auxiliary clamping systems automatically move along with the main clamping arms, so that there is no need for a separate actuator device for the auxiliary clamping systems. In fact, each main clamping arm is part of a system comprising the holder, the other main clamping arm and the actuator device, on the one hand, and of a system comprising the holder and an auxiliary clamping system, on the other hand, and thus couples said systems.

In a practical embodiment of the vehicle according to the invention, the auxiliary clamping arm has an outer part, which extends outside the gap between the main clamping arms in relation to the main clamping arm, and an inner part, which extends within the gap between the main clamping arms in relation to the main clamping arm. In this case, the connecting arm may be connected to the auxiliary clamping arm at the outer part of the auxiliary clamping arm, while the object-contact region of the auxiliary clamping arm may be situated on the inner part of the auxiliary clamping arm. In this configuration, the connecting arm remains outside the region of the object.

In general, it may be the case that the object-handling mechanism has a substantially mirror-symmetrical appearance, with a first set of a main clamping arm and an auxiliary clamping system on one side of a plane of symmetry, and a second set of the other main clamping arm and the other auxiliary clamping system on the other side of the plane of symmetry.

It is particularly advantageous if the actuator device comprises a single actuator of variable length, which extends between the main clamping arms and connects the main clamping arms to one another, and the object-handling mechanism comprises a coordination arm which is configured to cause a movement of the main clamping arms towards one another or away from one another to take place with a fixed interconnection of the main clamping arms in relation to one another. The use of the coordination arm allows the number of actuators of the actuator device to be reduced to a minimum, specifically to just one, thereby saving costs and increasing reliability. The single actuator may for example be a piston/cylinder device.

In the configuration with the single actuator and the coordination arm, it may then in particular be the case that the single actuator is pivotably connected to one main clamping arm at a position which is situated at a distance from the connecting region of that main clamping arm in a direction along that main clamping arm towards the object-contact region of that main clamping arm, and to the other main clamping arm at a position which is situated at the same distance from the connecting region of that main clamping arm in the same direction along that main clamping arm. Furthermore, the coordination arm may be pivotably connected to one main clamping arm at a position which is situated at a distance from the connecting region of that main clamping arm in the direction along that main clamping arm towards the object-contact region of that main clamping arm, and to the other main clamping arm at a position which is situated at the same distance from the connecting region of that main clamping arm in the opposite direction along that main clamping arm. In this configuration, operating the single actuator results in the main clamping arms moving apart, or moving towards one another, in a symmetrical manner.

The object-contact region of the main clamping arms and the auxiliary clamping arms, respectively, may be designed in any desired suitable manner. In this respect, each of the object-contact regions may comprise an object-contact body such as a roll.

In order to have optimum flexibility in the handling of an object, it is expedient if the holder is movable in the vertical direction of the vehicle in relation to the frame of the vehicle. This may be realized in any desired suitable manner, for example by way of a height guide for the holder and a toothed belt driven by a motor and coupled to the holder. It is furthermore expedient for the holder to be tiltable about a tilting axis, which extends in a main direction of travel of the vehicle, in relation to the frame of the vehicle. Here, it may be the case that, around the tilting axis, the holder has an open space where wiring of the actuator device is passed through. The wiring of the actuator device can then remain in place irrespective of the position of the holder in relation to the frame of the vehicle without contact being made therewith at any point in time by one or more elements.

In a practical embodiment of the vehicle according to the invention, a controller programmed with a series of control algorithms is provided. One of these control algorithms may be a control algorithm intended for bringing the holder into, and holding it in, a position which is slightly tilted in relation to a standard position, in which the main clamping arms and the auxiliary clamping arms extend substantially in a horizontal plane. This is useful for example in a situation in which a vessel containing a product such as a whole cheese is held in the vehicle and the product has to be picked up from the vessel by another device. Keeping the vessel slightly tilted ensures a specific position of the product, specifically against a wall of the vessel at the lowest portion of the vessel, whereby it is possible for the other device to be designed without a separate detection means for detecting the position of the product in the vessel because it may be assumed that said position is the same at all times.

Within the scope of the invention, it is possible that the vehicle is operated and moved manually, but it is also possible that the vehicle is an autonomously driving vehicle and comprises at least one navigation camera which is mounted on the frame of the vehicle. Within this scope, it is also possible that the navigation camera is situated at a position on the frame where the navigation camera is able to perceive an object held by the object-handling mechanism, and that, if the vehicle comprises a controller as described above, the series of control algorithms of the controller comprises a control algorithm intended for processing input from the navigation camera for the purpose of a monitoring action for the dairy-production process being carried out. An example of such a monitoring action is checking whether a degree of soiling of an object held in the vehicle is within or outside an acceptable range.

Interesting possibilities for the mobility of the vehicle emerge if the vehicle comprises two wheel pairs for contact of the vehicle with an underlying surface, and a direction of travel of one wheel pair is fixable and settable while the other wheel pair comprises swivel wheels. In this case, the other wheel pair is a following wheel pair and a desired direction of travel of the vehicle is set in a simple manner, specifically by way of an appropriate direction of travel of the one wheel pair. In this way, it is possible for example that the vehicle can move not only in directions that may be referred to as forwards and backwards, but also in lateral directions. In this respect, the vehicle can for example move easily between process locations without constantly having to turn in its entirety. For setting the direction of travel of the one wheel pair, it is possible for example for use to be made of an appropriate linkage and an actuator that acts on at least one component of the linkage.

The invention also provides a combination of the vehicle like that defined and described above, a facility for producing a dairy product, such as cheese, which comprises at least one process location configured for carrying out an action on the dairy product, an intermediate form of the dairy product or one or more raw materials of the dairy product, and at least one vessel for holding therein the dairy product, an intermediate form of the dairy product or one or more raw materials of the dairy product. In particular, the combination may comprise at least two vessels of different diameters for holding therein the dairy product, an intermediate form of the dairy product or one or more raw materials of the dairy product. As explained above, the vehicle is fully equipped to reliably handle objects of different sizes, in particular due to the presence of the auxiliary clamping systems in the object-handling mechanism beside the main clamping arms.

The invention will be explained below on the basis of the figures, which are generally schematic and relate to a non-limiting exemplary embodiment of a vehicle for use in a cheese-production process, with identical reference numerals denoting identical or similar components, and in which:
Figure 1 schematically shows a perspective view of the vehicle;
Figure 2 schematically shows a perspective view of a portion of the vehicle with an object-handling mechanism of the vehicle;
Figure 3 schematically shows a plan view of components of the object-handling mechanism and a holder on which the object-handling mechanism is mounted, with the components of the object-handling mechanism in a first position relative to one another;
Figure 4 schematically shows a plan view of components of the object-handling mechanism and the holder, with the components of the object-handling mechanism in a second position relative to one another;
Figure 5 schematically shows a plan view of components of the object-handling mechanism and the holder, with the components of the object-handling mechanism in a third position relative to one another;
Figure 6 schematically shows a perspective view of a portion of the vehicle with the object-handling mechanism, with the object-handling mechanism in a tilted position;
Figures 7 and 8 illustrate how, in the tilted position of the object-handling mechanism, a whole cheese is positioned in a vessel which is clamped between components of the object-handling mechanism; and
Figure 9 schematically shows a perspective view of a portion of the vehicle with a wheel pair of the vehicle and control means for the wheel pair.

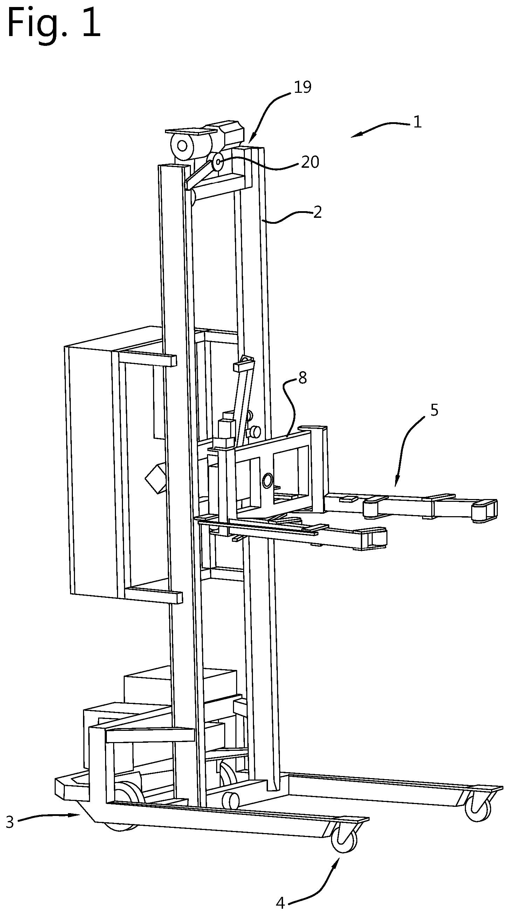

Figure 1 schematically shows a perspective view of a vehicle 1 that is suitable for use in a cheese-production process. This cheese-production process may be a process carried out in a facility with at least one process location configured for carrying out of an action on the cheese, an intermediate form of the cheese or one or more raw materials of the cheese. In this case, the vehicle 1 is used for transporting the cheese, an intermediate form of the cheese or one or more raw materials of the cheese to and from the at least one process location, and possibly also for other purposes, such as turning over the cheese. The facility may be the facility known from WO-2020/197392-A1, and the vehicle 1 may be the fully automatic robot vehicle as described above in the introduction, and may be used for at least some of the functions mentioned in the introduction.

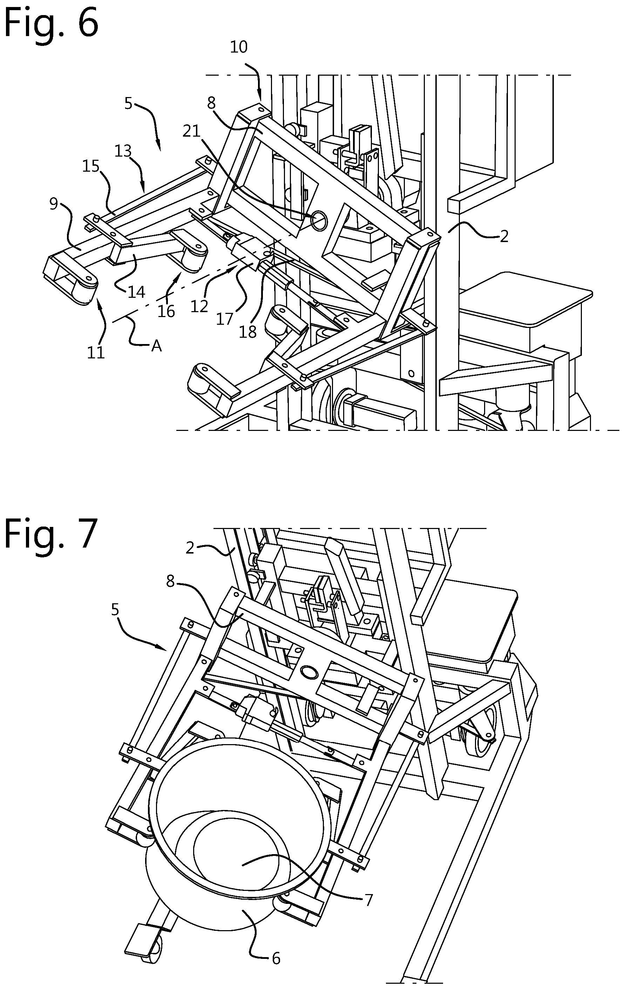

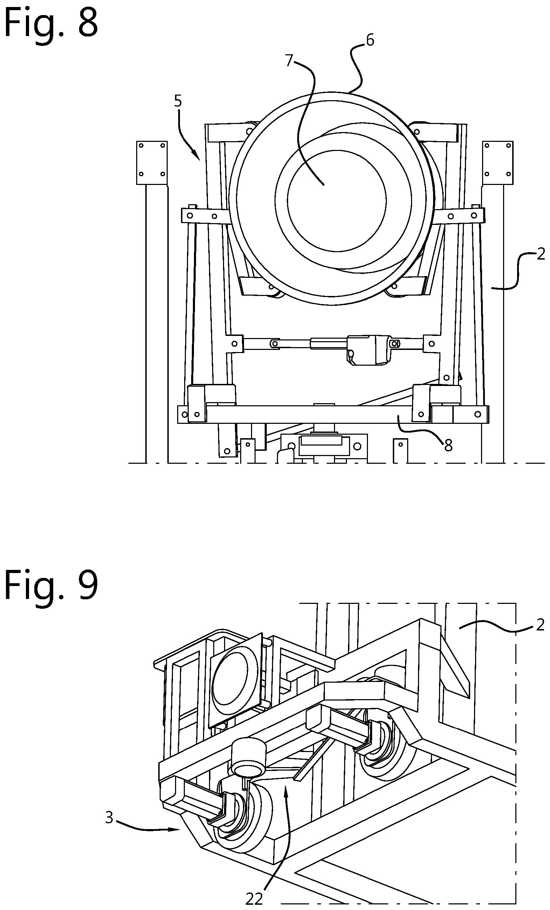

Figure 1 shows inter alia the following components of the vehicle 1:
- a mobile frame 2,
- two wheel pairs 3, 4, wherein the direction of travel of a first wheel pair 3 is fixable and settable, and a second wheel pair 4 comprises swivel wheels,
- an object-handling mechanism 5 that serves for picking up and holding an object such as a vessel 6 containing a whole cheese 7, as shown in Figures 7 and 8, and releasing said object again, and
- a holder 8 which supports the object-handling mechanism 5 on the frame 2.

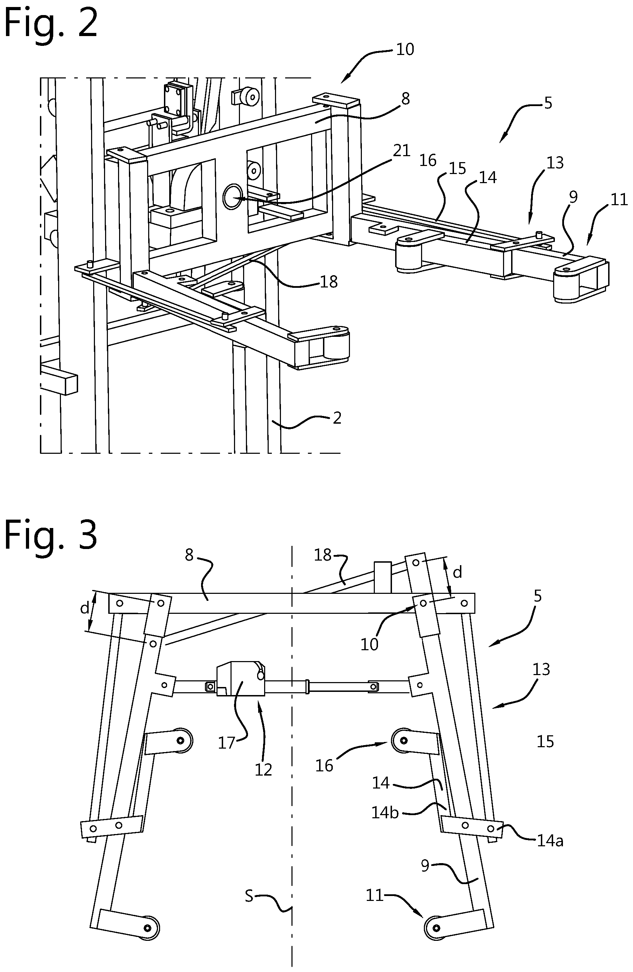

Figure 2 shows the object-handling mechanism 5 and the holder 8 on a larger scale. Various components of the object-handling mechanism 5 are shown in this figure, and are clearly visible in particular in Figures 3-5:
- two main clamping arms 9 which extend next to one another with a gap, each have a connecting region 10 and an object-contact region 11 situated at a distance from the connecting region 10, are pivotably connected to the holder 8 at the connecting region 10, and are configured to come into contact with an object 6 at the object-contact region 11,
- an actuator device 12 which is configured to act on the main clamping arms 9 so as to bring about a pivoting movement of the main clamping arms 9 in relation to the holder 8 that is a movement of the main clamping arms 9 towards one another or away from one another, and
- two auxiliary clamping systems 13 with an auxiliary clamping arm 14, which extends partially in the gap between the main clamping arms 9, and a connecting arm 15, wherein the auxiliary clamping arm 14 is pivotably connected to one of the main clamping arms 9 at a position between the connecting region 10 and the object-contact region 11 of the main clamping arm 9, is also connected to the holder 8 by means of the connecting arm 15, one side of which is pivotably connected to the auxiliary clamping arm 14 and the other side of which is pivotably connected to the holder 8, and has an object-contact region 16 at the place where the auxiliary clamping arm 14 is configured to come into contact with an object 6.

In the example shown, the connecting arm 15 extends completely outside the gap between the main clamping arms 9. The auxiliary clamping arm 14 has an outer part 14a, which extends outside the gap between the main clamping arms 9 in relation to the main clamping arm 9, and an inner part 14b, which extends within the gap between the main clamping arms 9 in relation to the main clamping arm 9. The connecting arm 15 is connected to the auxiliary clamping arm 14 at the outer part 14a of the auxiliary clamping arm 14, while the object-contact region 16 of the auxiliary clamping arm 14 is situated on the inner part 14b of the auxiliary clamping arm 14.

The actuator device 12 comprises a single actuator 17, which comprises a piston/cylinder device in the example shown. The actuator 17 is situated in the same plane as the main clamping arms 9 and is coupled at one side to one of the main clamping arms 9 and, in a similar way, at the other side to the other of the main clamping arms 9. In this configuration, it is achieved that, when the piston is extended in relation to the cylinder, the main clamping arms 9 are pivoted apart and, when the piston is retracted in relation to the cylinder, the main clamping arms 9 are pivoted towards one another. Furthermore, in the object-handling mechanism 5, there is provided a coordination arm 18, which ensures that any movement of the main clamping arms 9 relative to one another is at all times symmetrical in relation to a plane of symmetry S like that indicated in Figure 3. For this purpose, the coordination arm 18 is pivotably connected to one main clamping arm 9 at a position which is situated at a distance d from the connecting region 10 of that main clamping arm 9 in the direction along that main clamping arm 9 towards the object-contact region 11 of that main clamping arm 9, and to the other main clamping arm 9 at a position which is situated at the same distance d from the connecting region 10 of that main clamping arm 9 in the opposite direction along that main clamping arm 9.

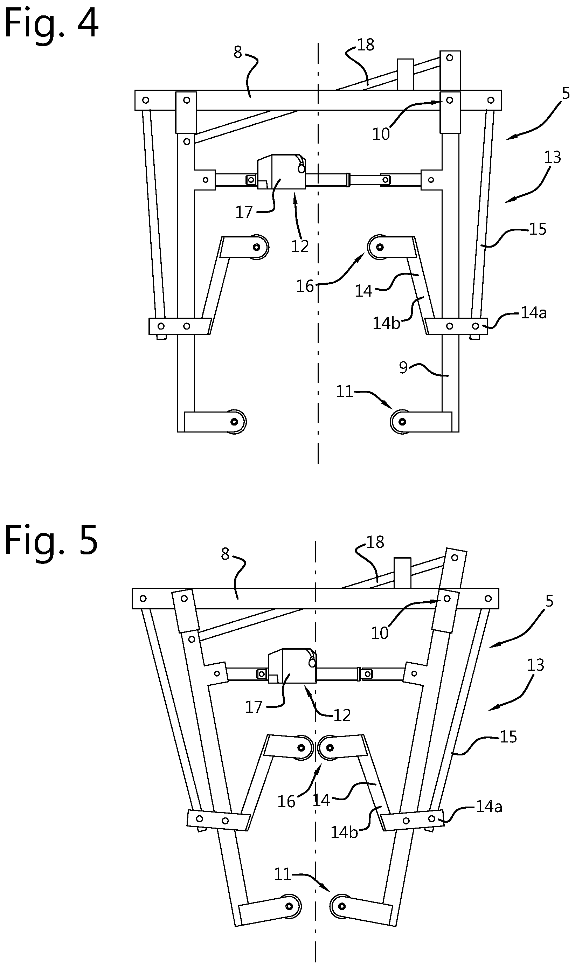

Figures 3-5 show three successive positions of the object-handling mechanism 5, wherein the gap between the main clamping arms 9 is largest in Figure 3, is smallest in Figure 5, and has an intermediate dimension in Figure 4. In this way, Figures 3-5 illustrate a movement of the main clamping arms 9 towards one another that is intended to clamp an object 6 firmly between the main clamping arms 9 and the auxiliary clamping arms 14, so that the object 6 can be held and handled in the vehicle 1. Here, the object-handling mechanism 5 makes contact with the object 6 at four places, specifically the places of the object-contact regions 11 of the main clamping arms 9 and the object-contact regions 16 of the auxiliary clamping arms 14. In the example shown, rollers are situated in the respective object-contact regions 11, 16. When the main clamping arms 9 pivot towards one another and a distance between the object-contact regions 11 of the main clamping arms 9 decreases, at the same time a distance between the object-contact regions 16 of the auxiliary clamping arms 14 automatically decreases in that the auxiliary clamping arms 14 are pulled into an increasingly tilted position in relation to the main clamping arms 9 by the connecting arms 15, wherein the inner parts 14b of the auxiliary clamping arms 14 are tilted increasingly further inwards in relation to the main clamping arms 9.

In addition to the fact that the object-handling mechanism 5 can be moved into a more open and a more closed state, two other settings are also possible. Firstly, it is possible for a height position of the object-handling mechanism 5 to be varied. Figure 1 shows a roller system 19 with rollers at the bottom and top of the frame 2. One of the rollers is a driven roller 20. The roller system 19 can guide a loop-type strap or the like that is connected to the holder 8, whereby it is achieved that the holder 8 and thus the object-handling mechanism 5 can be pulled upwards along the frame 2 or lowered along the frame 2 as desired. Secondly, an orientation of the object-handling mechanism 5 can be varied. A normal orientation of the object-handling mechanism 5 is a horizontal orientation, as shown in Figures 1 and 2. An example of a tilted orientation of the object-handling mechanism 5 is shown in Figure 6. With this orientation, the holder 8 and the object-handling mechanism 5 are tilted about a tilting axis A which extends in the front/rear direction of travel of the vehicle 1. The holder 8 has for example a physical axis which is acted on by a mechanism for rotating the axis, or is mounted on a rotatable physical axis. At any rate, it is expedient for the holder 8 to have an open central space 21, as is the case in the example shown, because such a space 21 can be used for passing through wiring of the actuator device 12.

An expedient effect of the possibility of tilting the object-handling mechanism 5 is illustrated in Figures 7 and 8. As mentioned above, these figures show a vessel 6 containing a whole cheese 7. One step in the cheese-production process may be taking the whole cheese 7 out of the vessel 6 by way of an overturning means with a suction cup. Keeping the vessel 6 in a slightly tilted position, as shown clearly in Figure 7, ensures that the whole cheese 7 is situated in the vessel 6 in a fixed position even though the whole cheese 7 is situated in the vessel 6 with a clearance. Figures 7 and 8 show that this position is logically against a wall of the vessel 6 at the lowest portion of the vessel 6.

The vehicle 1 may be an autonomously driving vehicle. In this case, it is for example expedient for a navigation camera to be mounted at the top of the frame 2. Such a camera may also be used to inspect an object held in the vehicle 1. In this respect, it can be checked for example in an automated manner whether a vessel 6 is sufficiently clean or actually should be cleaned.

The aforementioned first wheel pair 3 of the vehicle 1 is shown in Figure 9. This figure also shows a linkage 22 which is used to set the position of the axle of the wheels of the first wheel pair 3 in relation to the frame 2. The appropriate position of the linkage 22 is set by means of an actuator device acting on the linkage 22. Figure 1 shows a position of the wheels of the first wheel pair 3 which allows the vehicle 1 to move in the normal front/rear direction of travel. By contrast, Figure 9 shows a position of the wheels in which the position of the axle of the wheels has been rotated through a quarter turn, and in which it is therefore possible for the vehicle 1 to move in the lateral direction of travel. In the case in which the vehicle 1 is an autonomously driving vehicle, the wheels of the first wheel pair 3 may be driven wheels.

It will be clear to a person skilled in the art that the scope of the invention is not limited to the examples discussed above, but that various changes and modifications thereof are possible without departing from the scope of the invention as defined in the attached claims.

The invention may be summarized as follows. A vehicle 1 for use in a dairy-production process comprises an object-handling mechanism 5 which is configured to pick up and hold an object 6 and to release said object again, and a holder 8 on which the object-handling mechanism 5 is mounted, wherein the holder 8 is situated on a frame 2 of the vehicle 1. The object-handling mechanism 5 comprises two main clamping arms 9 which extend next to one another with a gap, an actuator device 12 which is configured to cause the main clamping arms 9 to move towards one another or away from one another, and two auxiliary clamping systems 13 with an auxiliary clamping arm 14, which extends at least partially in the gap between the main clamping arms 9, and a connecting arm 15. On account of the connecting arm 15, during a movement of the main clamping arms 9 in relation to one another, a change in the position of the auxiliary clamping arms 14 in relation to the main clamping arms 9 is realized automatically at the same time. Consequently, the object-handling mechanism 5 is ideal for reliably picking up and firmly clamping objects 6 of different sizes, such as vessels 6 with different diameters.

## Claims

1. Vehicle (1) for use in a dairy-production process, comprising an object-handling mechanism (5) which is configured to pick up and hold an object (6) and to release said object again, and a holder (8) on which the object-handling mechanism (5) is mounted, wherein the holder (8) is situated on a frame (2) of the vehicle (1) and the object-handling mechanism (5) comprises the following components:
- two main clamping arms (9) which extend next to one another with a gap, each have a connecting region (10) and an object-contact region (11) situated at a distance from the connecting region (10), are pivotably connected to the holder (8) at the connecting region (10), and are configured to come into contact with an object (6) at the object-contact region (11),
- an actuator device (12) which is configured to act on the main clamping arms (9) so as to bring about a pivoting movement of the main clamping arms (9) in relation to the holder (8) that is a movement of the main clamping arms (9) towards one another or away from one another, and
- two auxiliary clamping systems (13) with an auxiliary clamping arm (14), which extends at least partially in the gap between the main clamping arms (9), and a connecting arm (15), wherein the auxiliary clamping arm (14) is pivotably connected to one of the main clamping arms (9) at a position between the connecting region (10) and the object-contact region (11) of the main clamping arm (9), is also connected to the holder (8) by means of the connecting arm (15), one side of which is pivotably connected to the auxiliary clamping arm (14) and the other side of which is pivotably connected to the holder (8), and has an object-contact region (16) at the place where the auxiliary clamping arm (14) is configured to come into contact with an object (6).

2. Vehicle (1) according to Claim 1, wherein:
- the auxiliary clamping arm (14) has an outer part (14a), which extends outside the gap between the main clamping arms (9) in relation to the main clamping arm (9), and an inner part (14b), which extends within the gap between the main clamping arms (9) in relation to the main clamping arm (9),
- the connecting arm (15) is connected to the auxiliary clamping arm (14) at the outer part (14a) of the auxiliary clamping arm (14), and
- the object-contact region (16) of the auxiliary clamping arm (14) is situated on the inner part (14b) of the auxiliary clamping arm (14).

3. Vehicle (1) according to Claim 1 or 2, wherein the object-handling mechanism (5) has a substantially mirror-symmetrical appearance, with a first set of a main clamping arm (9) and an auxiliary clamping system (13) on one side of a plane of symmetry (S), and a second set of the other main clamping arm (9) and the other auxiliary clamping system (13) on the other side of the plane of symmetry (S).

4. Vehicle (1) according to one of Claims 1-3, wherein:
- the actuator device (12) comprises a single actuator (17) of variable length, which extends between the main clamping arms (9) and connects the main clamping arms (9) to one another, and
- the object-handling mechanism (5) comprises a coordination arm (18) which is configured to cause a movement of the main clamping arms (9) towards one another or away from one another to take place with a fixed interconnection of the main clamping arms (9) in relation to one another.

5. Vehicle (1) according to Claim 4, wherein the single actuator (17) is pivotably connected to one main clamping arm (9) at a position which is situated at a distance from the connecting region (10) of that main clamping arm (9) in a direction along that main clamping arm (9) towards the object-contact region (11) of that main clamping arm (9), and to the other main clamping arm (9) at a position which is situated at the same distance from the connecting region (10) of that main clamping arm (9) in the same direction along that main clamping arm (9).

6. Vehicle (1) according to Claim 4 or 5, wherein the coordination arm (18) is pivotably connected to one main clamping arm (9) at a position which is situated at a distance (d) from the connecting region (10) of that main clamping arm (9) in the direction along that main clamping arm (9) towards the object-contact region (11) of that main clamping arm (9), and to the other main clamping arm (9) at a position which is situated at the same distance (d) from the connecting region (10) of that main clamping arm (9) in the opposite direction along that main clamping arm (9).

7. Vehicle (1) according to one of Claims 1-6, wherein the holder (8) is movable in the vertical direction of the vehicle (1) in relation to the frame (2) of the vehicle (1).

8. Vehicle (1) according to one of Claims 1-7, wherein the holder (8) is tiltable about a tilting axis (A), which extends in a main direction of travel of the vehicle (1), in relation to the frame (2) of the vehicle (1).

9. Vehicle (1) according to Claim 8, wherein, around the tilting axis, the holder (8) has an open space (21) where wiring of the actuator device (12) is passed through.

10. Vehicle (1) according to Claim 8 or 9, comprising a controller which is programmed with a series of control algorithms, including a control algorithm intended for bringing the holder (8) into, and holding it in, a position which is slightly tilted in relation to a standard position, in which the main clamping arms (9) and the auxiliary clamping arms (14) extend substantially in a horizontal plane.

11. Vehicle (1) according to one of Claims 1-10, wherein the vehicle (1) is an autonomously driving vehicle (1) and comprises at least one navigation camera which is mounted on the frame (2) of the vehicle (1).

12. Vehicle (1) according to Claim 11, where dependent on Claim 10, wherein:
- the navigation camera is situated at a position on the frame (2) where the navigation camera is able to perceive an object (6) held by the object-handling mechanism (5), and
- the series of control algorithms of the controller comprises a control algorithm intended for processing input from the navigation camera for the purpose of a monitoring action for the dairy-production process being carried out.

13. Vehicle (1) according to one of Claims 1-12, comprising two wheel pairs (3, 4) for contact of the vehicle (1) with an underlying surface, wherein:
- a direction of travel of one wheel pair (3) is fixable and settable, and
- the other wheel pair (4) comprises swivel wheels.

14. Combination of the vehicle (1) according to one of Claims 1-13, a facility for producing a dairy product, which comprises at least one process location configured for carrying out an action on the dairy product, an intermediate form of the dairy product or one or more raw materials of the dairy product, and at least one vessel (6) for holding therein the dairy product, an intermediate form of the dairy product or one or more raw materials of the dairy product.

15. Combination according to Claim 14, comprising at least two vessels (6) of different diameters for holding therein the dairy product, an intermediate form of the dairy product or one or more raw materials of the dairy product.
